# FASCICULE DE BREVET EUROPEEN

(11) **EP 2 267 947 B1**
(45) Date de publication et mention de la délivrance du brevet: **05.09.2018**
(21) Numéro de dépôt: 10167304.4
(22) Date de dépôt: 25.06.2010
(51) Int. Cl.: H04L 12/28, E06B 9/56

(54) **Capteur vent avec seuils par produits**
Windsensor mit Schwellenwerten je nach Produkt
Wind sensor with thresholds by products

(30) Priorité: 26.06.2009 FR 0954385
(43) Date de publication de la demande: 29.12.2010
(73) Titulaire: SOMFY ACTIVITES SA, 74300 Cluses (FR)
(72) Inventeur: Mugnier, Mickaël, 74130 Bonneville (FR); Nguyen Van, Cyrille, 74000 Annecy (FR); Deshayes, Jean-Christophe, 78800 Saint Pierre en Faucigny (FR)
(74) Mandataire: Bugnion Genève

(56) Documents cités:
- EP-A1- 1 054 134
- WO-A1-2005/038187
- US-A1- 2003 069 670

## Description

L'invention concerne un capteur de sécurité au vent, destiné à protéger des éléments domotiques mobiles. Ces éléments sont installés généralement sur une ou plusieurs façades d'un bâtiment.

De nombreux documents de l'art antérieur décrivent de tels capteurs ou des installations comprenant ces capteurs de sécurité.

Dans le brevet US 5,225,748, il est décrit un anémomètre et une unité logique comprenant plusieurs seuils de comparaison de la mesure de vitesse de vent pour commander de manière sécurisée la position d'un store motorisé. Selon la valeur mesurée, la position du store est déterminée : deux positions intermédiaires sont ainsi définies, permettant de bénéficier d'une protection solaire aussi importante que le vent le permet.

Le brevet EP 0 771 929 décrit un capteur de vent autonome en énergie pour un store. L'émission d'un signal de repli est effectuée si la vitesse de vent mesurée dépasse un seuil.

Dans la demande de brevet FR 2 888 868, il est également décrit un capteur domotique autonome en énergie. L'émission d'un signal, contenant la valeur de la grandeur physique mesurée, n'a lieu que si celle-ci a varié d'une quantité donnée dans un intervalle de temps donné ou depuis l'émission précédente.

La demande de brevet WO 2005/038187 décrit une installation comprenant plusieurs éléments mobiles (protections solaires) motorisés. Chaque élément est muni de son propre dispositif de mesure des effets du vent, par exemple un accéléromètre. De plus, au moins un dispositif de mesure de la vitesse du vent est placé dans l'environnement des protections solaires motorisées. Dans un mode d'initialisation on peut enregistrer pour un élément mobile :
- une valeur seuil d'effets du vent, ou seuil de sécurité, permettant de valider, lorsque la mesure des effets du vent est supérieure à cette valeur seuil, une action de repli de l'élément mobile,
- une première valeur seuil de vitesse du vent permettant de valider, lorsque la vitesse du vent est inférieure à cette valeur seuil, une action de déploiement de l'élément mobile.

La valeur seuil d'effets du vent et la première valeur seuil de vitesse du vent correspondent donc à des actions opposées de l'élément mobile. Ces valeurs de seuil peuvent être enregistrées dans une mémoire d'une unité de commande, du dispositif de mesure de vitesse du vent ou au niveau de chaque élément mobile.

Dans ce document, une corrélation est recherchée entre les valeurs mesurées des effets du vent et la valeur de vitesse du vent à un instant donné pour définir une deuxième valeur seuil de vitesse du vent correspondant au seuil de sécurité. Ainsi, des éléments mobiles caractérisés par exemple par un même seuil de sécurité relativement aux effets du vent, vont donner naissance à des valeurs différentes pour la deuxième valeur seuil de vitesse du vent.

Une troisième valeur seuil de vitesse du vent peut être déduite de la deuxième valeur seuil pour valider une action de repli de l'élément mobile. Il en résulte que des actions de repli d'éléments mobiles de même type seront provoquées par différentes valeurs de vitesse du vent.

Selon cette demande de brevet, les valeurs seuil d'effets du vent peuvent être choisies identiques pour les dispositifs motorisés de même type ou pour les dispositifs installés sur une même façade. Cependant, à chaque dispositif est néanmoins associé une valeur seuil d'effets du vent (valeur de sécurité) et au moins la première valeur seuil de vitesse du vent correspondant à la validation du déploiement. Cet enregistrement a lieu au cours d'une étape d'initialisation d'un procédé d'apprentissage et il en résulte une perte de temps importante pour l'installateur, même s'il choisit d'affecter des valeurs de seuil identiques d'un produit à l'autre.

La demande de brevet EP 1 939 373 décrit l'apprentissage automatique d'un seuil de vibration, en utilisant la mesure donnée par un accéléromètre disposé sur un écran mobile motorisé lorsqu'on agite manuellement ledit écran.

L'invention vise à répondre à divers objectifs pour améliorer les dispositifs de l'art antérieur :
Il est devenu essentiel de simplifier au plus les procédures d'installation et de réglage des dispositifs de protection solaire afin de ne pas ajouter un coût d'installation élevé au coût des équipements et afin de minimiser les risques d'erreur. L'utilisation de moyens de visualisation clairs et sans ambiguïté doivent simplifier et sécuriser la procédure de réglage du capteur de sécurité, tout en permettant néanmoins de tenir compte de sensibilités différentes au vent des différents types d'équipements de protection solaire.

De plus, l'accroissement du trafic radio lié à l'utilisation croissante de dispositifs commandés ou communiquant à distance impose de réduire au plus la quantité d'ordres émis, et plus encore lorsqu'il s'agit d'ordres de sécurité.

En particulier, il est important qu'un capteur de sécurité communique lui-même, de la façon la plus directe et la plus simple possible, et simultanément, avec tous les dispositifs concernés par une commande de sécurité, en particulier sans qu'il soit nécessaire de passer par l'intermédiaire d'un dispositif de supervision comme une centrale de commande pour le traitement des commandes de sécurité. Un délai de quelques secondes dans un ordre de repli peut en effet entraîner la destruction ou la dégradation d'un élément mobile de protection solaire.

Selon l'invention, le capteur de sécurité au vent, destiné à la protection d'éléments domotiques mobiles comprend des actionneurs raccordés aux éléments domotiques mobiles, qui doivent obéir à des ordres envoyés par le capteur de sécurité au vent. Chaque élément domotique est affecté à un type distinct d'éléments domotiques mobiles, enregistré dans chaque actionneur raccordé à l'élément mobile. Le capteur de sécurité au vent comprend un dispositif de mesure physique d'au moins un paramètre lié à l'action du vent, un moyen de communication radiofréquences, est adapté pour émettre un signal lorsque le paramètre dépasse un seuil, il comprend une table d'affectation dans laquelle figurent un premier seuil et un deuxième seuil relatifs à des types distincts d'éléments domotiques mobiles et le signal émis comprend un identifiant du type d'éléments mobiles dont le seuil a été dépassé, un code de commande d'une action de sécurité, et un identifiant du capteur de sécurité et/ou une information permettant de s'assurer de l'appartenance du capteur au réseau.
Selon l'invention, les seuils sont affectés à un type d'éléments mobiles.

Selon l'invention, l'identifiant de type peut prendre au moins une première valeur prédéfinie, relative à un élément domotique mobile de type à lames orientables et empilables, une deuxième valeur prédéfinie, relative à un élément domotique mobile de type écran enroulable à mouvement vertical, et une troisième valeur prédéfinie, relative à un élément domotique mobile de type store enroulable avec composante horizontale de mouvement.

Selon l'invention, la table d'affectation peut comprendre au moins un sous-niveau d'affectation de codes de commande distincts à des seuils distincts, pour un même type d'éléments domotiques mobiles.

Selon l'invention, le moyen de communication peut être bidirectionnel.

Selon l'invention, le capteur de sécurité au vent peut comprendre un programme de mise à jour de la table d'affectation et un même seuil par défaut peut être affecté à tous les types d'éléments domotiques mobiles tant qu'une première mise à jour n'a pas été effectuée.

Selon l'invention, le capteur de sécurité au vent peut comprendre un moyen manuel d'ajustement de seuil et un même seuil fixé par ce moyen manuel d'ajustement peut être affecté à tous les types d'éléments domotiques mobiles lorsque celui-ci est activé.

Selon l'invention, le capteur de sécurité au vent peut comprendre un moyen d'alimentation autonome tel qu'une pile primaire ou un accumulateur rechargé par un panneau photovoltaïque.

Selon l'invention, l'installation domotique comprend au moins un capteur de sécurité au vent, au moins un dispositif domotique, raccordé au secteur alternatif, et ce dispositif domotique comprend un moyen bidirectionnel de communication radiofréquences et une mémoire tampon adaptée pour contenir des valeurs de seuils, que la table d'affectation met en correspondance avec un identifiant de type d'éléments domotiques mobiles, et qui sont transmises au capteur de sécurité lors d'une interrogation par le capteur de sécurité.

Selon l'invention, les valeurs de seuils peuvent être ajustées et enregistrées dans la mémoire tampon à l'aide d'un moyen d'interface homme-machine d'un dispositif de commande de l'installation.

Selon l'invention, l'installation domotique peut comprendre des actionneurs entraînant des éléments mobiles, chaque actionneur étant muni de moyens bidirectionnels de communication et apte à recevoir et à exécuter :
- une commande d'appairage au capteur de sécurité
- une commande d'enregistrement d'un identifiant de type
- une commande de mouvement contenant l'identifiant de l'actionneur
- une commande de mouvement contenant l'identifiant de type.

Selon l'invention, le dispositif de commande d'une installation domotique comprend un capteur de sécurité au vent tel que décrit ci-dessus et un moyen d'interface homme-machine apte à différencier au moins un premier réglage relatif à un élément domotique mobile de type à lames orientables et empilables, un deuxième réglage relatif à un élément domotique mobile de type écran enroulable à mouvement vertical, et un troisième réglage relatif à un élément domotique mobile de type store enroulable avec composante horizontale de mouvement.

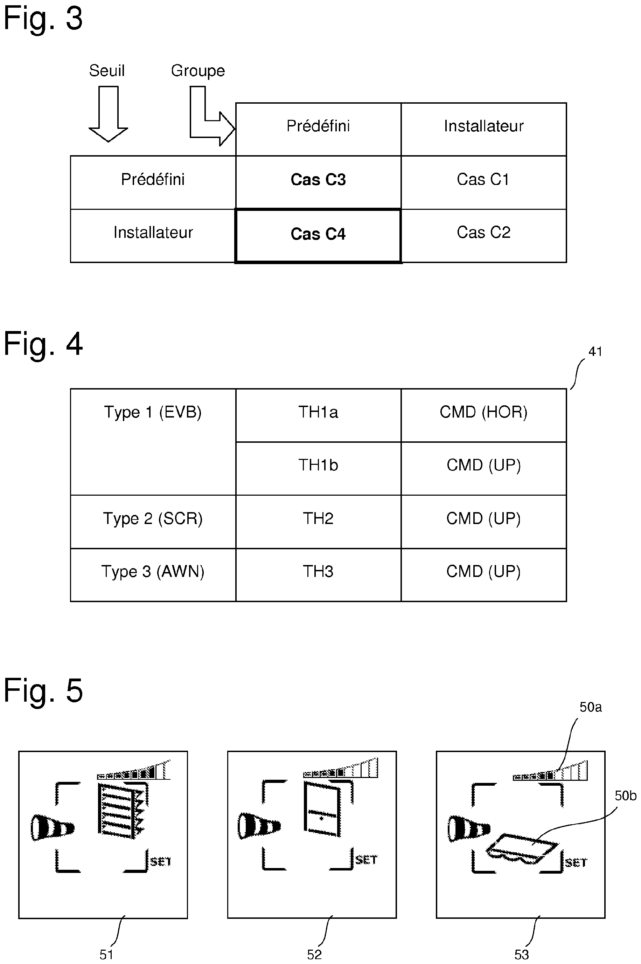

L'invention sera mieux comprise par l'homme du métier grâce à la description détaillée des différents modes d'exécution en relation avec les dessins accompagnants, dans lesquels :
La figure 1 décrit une installation domotique selon l'invention, comprenant un capteur de sécurité au vent, des dispositifs de commande et des actionneurs entraînant des éléments mobiles de protection solaire.
La figure 2 décrit sous forme d'un graphique un procédé de fonctionnement du capteur de sécurité au vent.
La figure 3 représente des modes de réglage et d'affectation de seuils et de groupes dans le capteur de sécurité au vent.
La figure 4 représente une table d'affectation de seuils et de commandes de sécurité à différents types d'éléments mobiles.
La figure 5 représente 3 configurations d'un moyen interface homme-machine logé dans un dispositif de commande apte à permettre le réglage de seuils par type d'éléments mobiles.
radiofréquences, représentés par le symbole d'une antenne 20. Un premier dispositif de commande 21 comprend en particulier une première interface homme-machine 21a, par exemple un clavier et un écran de dimensions réduites. A l'aide de cette interface, un utilisateur peut définir des ordres de commande qui seront envoyés vers un ou plusieurs actionneurs. A l'aide de cette interface, un installateur peut également ajuster des seuils de vent, comme il sera décrit en relation avec la figure 5. Le premier dispositif de commande est de type nomade, alimenté par piles primaires.

Un deuxième dispositif de commande 22 est raccordé au secteur électrique. Il comprend une deuxième interface homme-machine, par exemple un écran tactile de grandes dimensions. Alternativement, le deuxième dispositif de commande comprend un moyen d'alimentation autonome lui permettant d'être actif en permanence, au moins pour ce qui concerne l'écoute de messages radio.

L'installation comprend également un dispositif relais 23, ou boîte aux lettres, pouvant être assimilé à un dispositif de commande car apte, par exemple, à diffuser vers un dispositif autonome placé périodiquement en mode sommeil des informations et en particulier des commandes reçues de la part d'un dispositif de commande nomade à un moment où le dispositif autonome est endormi.

Avantageusement, le dispositif relais peut être contenu dans un actionneur raccordé au secteur, par exemple le quatrième actionneur.

L'installation comprend également au moins un capteur de sécurité au vent 24. Ce capteur comprend un moyen de mesure physique d'au moins un paramètre lié à l'action du vent, représenté par le symbole d'un anémomètre 24a (le moyen de mesure physique pouvant comprendre un anémomètre ou par exemple un dispositif connu de mesure de pression ou de contrainte ou de refroidissement) et comprend comme les autres éléments de l'installation un moyen bidirectionnel de communication radiofréquences, représenté par le symbole d'une antenne. Il comprend un moyen de comparaison 24b apte à déclencher l'émission d'un signal, à l'aide du moyen radiofréquences lorsque le paramètre dépasse un seuil.

Le capteur comprend enfin un moyen manuel 24c d'ajustement du seuil.

Tous les dispositifs utilisent un même protocole de communication permettant de définir un réseau domotique 30, propre à l'installation domotique. Ainsi, la communication entre dispositifs est préférentiellement effectuée de manière bidirectionnelle, comme représenté par une double flèche 31. Par exemple, le premier dispositif de commande envoie un ordre de déploiement vers le deuxième actionneur. Il reçoit un premier signal l'avertissant que l'ordre a bien été reçu. Il reçoit ensuite un deuxième signal l'avertissant que l'ordre a bien été exécuté. Ces signaux provoquent des affichages spécifiques sur la première interface homme-machine.

Cependant, la communication entre certains dispositifs peut également être assurée de manière unidirectionnelle en indiquant le destinataire, comme représenté par une flèche pointillée 32. Ce type de communication exclut un signal de retour.

De plus, la communication entre certains dispositifs peut être assurée par diffusion unidirectionnelle (« broadcast »), sans indication d'un destinataire particulier. En particulier, le capteur de sécurité au vent, bien qu'équipé de moyens de communication bidirectionnelle, communique en diffusion unidirectionnelle lors de l'émission de commande de sécurité consécutive à un dépassement de seuil. Ce mode de communication unidirectionnelle est aussi utilisé lors d'une procédure d'appairage pendant laquelle un actionneur mis dans un état particulier apprend qu'il doit obéir à des ordres envoyés par le capteur de sécurité.

Sans que cela nécessite d'être représenté sur la figure, il est entendu que chaque dispositif dispose d'un identifiant ID qui lui est propre, et que tous les dispositifs partagent une clé d'authentification ou « clé-maison » commune à tous les éléments de l'installation.

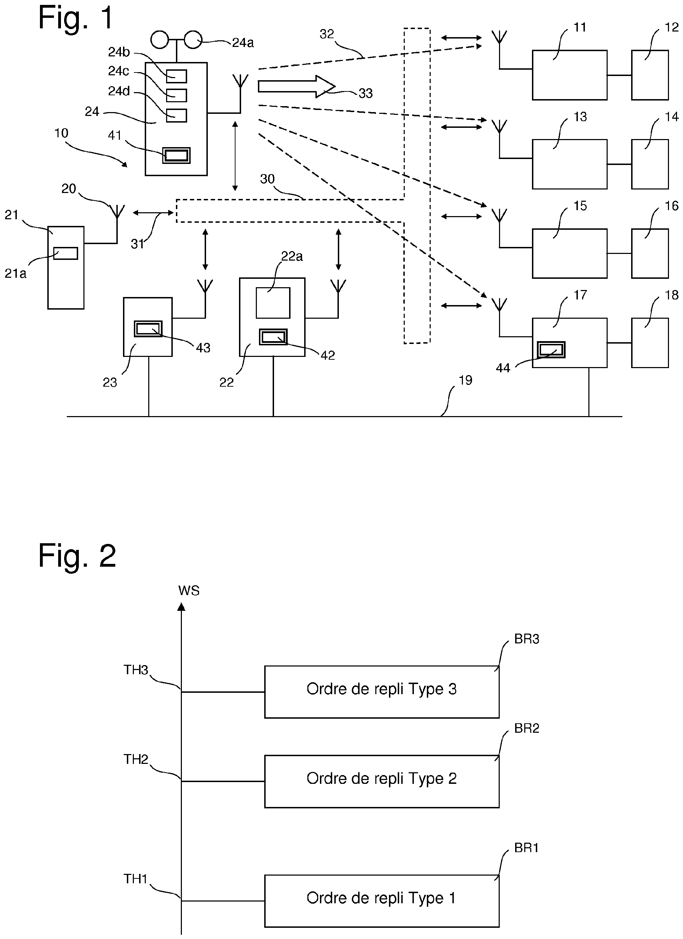

La figure 2 décrit sous forme d'un graphique dont l'axe vertical représente la vitesse du vent WS un procédé de fonctionnement du capteur de sécurité au vent. Plusieurs seuils ont été enregistrés dans le capteur et plusieurs groupes d'actionneurs ont été définis par l'installateur, par exemple un premier groupe, un deuxième groupe et un troisième groupe. Chaque groupe est repéré par un identifiant de groupe. Le capteur de sécurité comprend une table 41 dans laquelle figurent à la fois des valeurs de seuils et des identifiants de groupe. Un premier seuil TH1 provoque, lors de son dépassement à la hausse, l'émission par diffusion d'un signal BR1 comprenant l'identifiant du premier groupe. Le dépassement d'un deuxième seuil TH2 provoque, lors de son dépassement à la hausse, l'émission par diffusion d'un signal BR2 comprenant l'identifiant du deuxième groupe. Le dépassement d'un troisième seuil TH3 provoque, lors de son dépassement à la hausse, l'émission par diffusion d'un signal BR3 comprenant l'identifiant du troisième groupe. Chaque signal émis comprend un ordre de repli, de manière à mettre tous les éléments mobiles du groupe concerné dans une position de sécurité.

La figure 3 représente de manière générale quatre modes de réglage et d'affectation de seuils et de groupes (désignés par Cas 1 à Cas 4) dans le capteur de sécurité au vent. Selon le cas utilisé, chaque groupe peut être prédéfini ou défini par l'installateur. De même, le seuil affecté à un groupe peut être prédéfini ou défini par l'installateur.

Un seuil par défaut est un exemple de seuil prédéfini. Le fabricant du capteur de sécurité au vent prévoit un seuil de sécurité qu'il choisit suffisamment faible de manière à protéger efficacement tout type d'élément mobile de protection solaire. Ce seuil est préenregistré dans le capteur.

Selon l'invention, un groupe est prédéfini par un type d'éléments mobiles. Par exemple, les éléments mobiles de type à lames orientables et empilables définissent un premier type (Type 1), les éléments mobiles qui sont de type écran enroulable à mouvement vertical définissent un deuxième type (Type 2) et les éléments mobiles qui sont de type store enroulable avec composante horizontale de mouvement, définissent un troisième type (Type 3). Ainsi, les jalousies (ou stores vénitiens d'extérieur) appartiennent au Type 1, les screens d'extérieur appartiennent au Type 2, les stores à bras (ou stores de terrasse) appartiennent au Type 3.

A chacun de ces trois types correspond une sensibilité au vent différente, et donc un besoin de seuil particulier.

Ainsi, la possibilité d'affectation dans le capteur de sécurité de seuils à un type d'élément mobile, et non à un actionneur particulier d'élément mobile, est particulièrement génératrice de gain en temps et de suppression de risques de mauvais réglages.

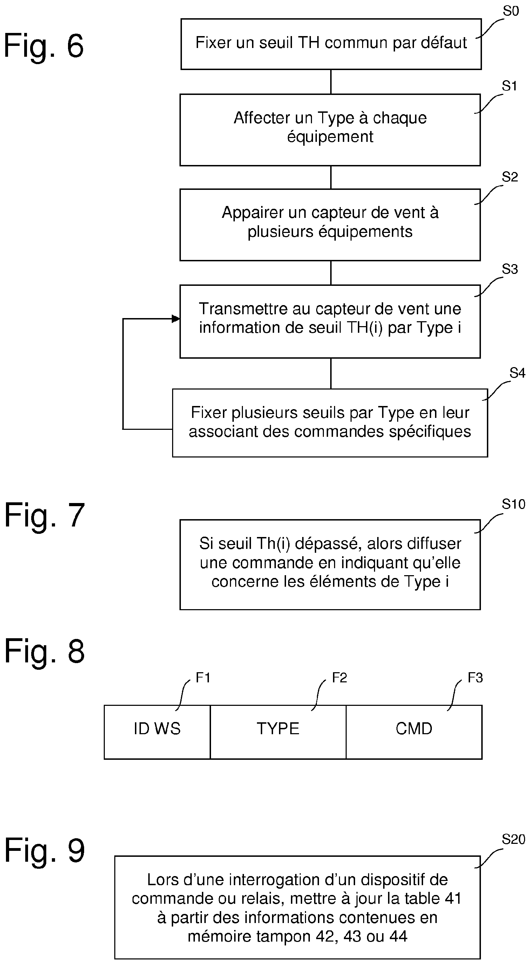

Dans le tableau de la figure 3, les cas de loin les plus intéressants permis par l'invention sont le troisième cas (indiqué en caractère gras) et surtout le quatrième cas (indiqué en caractère gras et entouré de trait fort).
Le troisième cas (Cas C3) est celui de groupe prédéfini au niveau du capteur par le type d'équipement mobile comme indiqué précédemment, avec un seuil de vent prédéfini pour chaque groupe. Ainsi un premier seuil par défaut correspond à tout élément mobile de type à lames orientables et empilables, un deuxième seuil par défaut correspond à tout élément mobile de type écran enroulable à mouvement vertical et un troisième seuil par défaut correspond à tout élément de type store enroulable avec composante horizontale de mouvement. Outre une nécessaire opération d'appairage du capteur de sécurité aux différents actionneurs, l'installateur n'a strictement aucune opération à effectuer si chaque actionneur de l'installation connaît le type d'élément mobile auquel il est raccordé, comme il sera précisé en relation avec la figure 6.

Le quatrième cas (Cas C4) est celui de groupe prédéfini comme précédemment, avec un seuil de vent réglable pour l'ensemble de chaque groupe, donc de chaque type d'équipement mobile. Ainsi, en une seule opération, l'installateur peut ajuster le seuil relatif à l'ensemble des éléments mobiles de type écran enroulable à mouvement vertical, par exemple en augmentant le seuil s'il a constaté que les produits utilisés dans cette installation sont particulièrement insensibles au vent. En présence simultanée de soleil et de vent, ce réglage d'un seuil plus élevé donne aux occupants du bâtiment le bénéfice d'une plus grande durée de protection solaire.

Comme expliqué plus bas, il conviendra de répartir les différents actionneurs selon les types prédéfinis dans le capteur de sécurité.

La figure 4 représente une table 41 d'affectation de seuils et de commandes de sécurité à différents types d'éléments mobiles. La table 41 est logée en mémoire dans le capteur de sécurité au vent. Sur la figure 4, elle correspond au cas de groupes prédéfinis, chaque groupe étant relatif à un type d'éléments mobiles. La table met en correspondance un identifiant de type avec le seuil correspondant. Dans le mode préféré de réalisation, la table comprend au moins un sous-niveau d'affectation de codes de commande distincts à des seuils distincts, pour un même groupe d'éléments domotiques mobiles. Ainsi, pour les éléments du premier type (à lames orientables et empilables, désignés par EVB) il est prévu un seuil bas de sécurité TH1a et un seuil haut de sécurité TH1b. Le dépassement à la hausse du seuil bas provoque l'émission d'une commande de sécurité basse CMD(HOR) consistant simplement en un ordre d'orientation des lames à l'horizontale. Ainsi, l'élément mobile devient beaucoup moins sensible au vent, tout en continuant à assurer une certaine efficacité de protection solaire. Le dépassement à la hausse du seuil haut provoque l'émission d'une commande de repli CMD(UP). Pour les éléments du deuxième type (écran enroulable à mouvement vertical, désignés par SCR), un seul deuxième seuil TH2 est prévu, dont le dépassement à la hausse provoque l'émission de la commande de repli CMD(UP). Pour les éléments du troisième type (store enroulable avec composante horizontale de mouvement, désigné par AWN), un seul troisième seuil TH3 est prévu, dont le dépassement à la hausse provoque l'émission de la commande de repli CMD(UP). Alternativement, des commandes de sécurité différentes sont émises selon les types. De même, le deuxième type et le troisième type peuvent faire l'objet de sous-niveaux d'affectation, avec deux seuils (voire plus) pour chaque type, en différenciant les commandes relatives à chaque seuil.

La figure 5 représente 3 configurations partielles du moyen interface homme-machine logé dans un dispositif de commande apte à permettre le réglage de seuils par type d'éléments mobiles. Une première configuration 51 correspond à l'affichage d'un mode de réglage de seuil relatif aux éléments mobiles de premier type. Une deuxième configuration 52 correspond à l'affichage d'un mode de réglage de seuil relatif aux éléments mobiles de deuxième type. Une troisième configuration 53 correspond à l'affichage d'un mode de réglage de seuil relatif aux éléments mobiles de troisième type. L'affichage comprend au moins un indicateur 50a visualisant le seuil de vent, par exemple sous forme de « bargraph », et un pictogramme 50b représentatif du type d'élément mobile auquel s'applique le réglage en cours. Par exemple, cette configuration partielle apparaît sur l'écran de l'interface homme-machine 21a tandis que les touches du clavier de l'interface permettent de passer d'une configuration à l'autre ou permettent l'ajustement du seuil affiché. Une touche de validation permet l'enregistrement de la valeur désirée.

Ainsi, l'interface homme-machine est apte à différencier au moins un premier réglage relatif à un élément domotique mobile de premier type, un deuxième réglage relatif à un élément domotique mobile de deuxième type, et un troisième réglage relatif à un élément domotique mobile de troisième type.

La figure 6 représente un procédé d'initialisation de l'installation.

Dans une étape préliminaire S0, le fabricant fixe le seuil par défaut, comme expliqué plus haut. Ce seuil par défaut peut néanmoins être modifié par l'installateur, par action sur un moyen manuel.

Dans une première étape S1, un type est affecté à chaque équipement. Préférentiellement le type est enregistré dans chaque actionneur raccordé à un élément mobile, par exemple en lui indiquant s'il est de type 1, de type 2 ou de type 3. Cette opération est normalement faite par le fabricant d'éléments mobiles motorisés, qui dispose d'outils lui permettant d'enregistrer des données dans la mémoire d'un actionneur. Dans le cas contraire, l'installateur peut effectuer cette opération d'affectation de type. Indépendamment de son utilisation dans le cadre de l'invention, la connaissance d'un type d'équipement est très utile par exemple pour les dispositifs de commande qui peuvent ainsi adapter leur ergonomie de commande aux spécificités de l'équipement. Ainsi, un actionneur d'élément mobile à lames orientables sera commandé à la fois par des commandes spécifiques d'orientation et par des commandes de repli ou déploiement, tandis qu'un actionneur d'écran enroulable à mouvement vertical ne sera commandé que par des commandes de repli ou déploiement.

Dans de nombreux cas, le type est enregistré dans l'actionneur par le fabricant de l'actionneur, cet actionneur étant spécifique à un type déterminé d'élément mobile. Dans ces cas, ni le fabricant d'élément mobile motorisé, qui intègre l'actionneur dans son produit, ni l'installateur n'ont à se préoccuper de cette opération d'affectation.

L'affectation d'un seuil à un type d'éléments mobiles écrase la valeur de seuil par défaut pour ce type d'éléments mobiles.

Dans une deuxième étape S2, on appaire le capteur de sécurité au vent 24 à chaque équipement qui devra réagir à toute commande émise par le capteur et contenant son identifiant de type.

L'étape S2 est inutile si l'installation ne comporte qu'un seul capteur de sécurité au vent et qu'il est admis que tout actionneur de l'installation doit obéir à une commande provenant d'un capteur de sécurité identifiable comme appartenant au réseau domotique 30. Cependant, il est prévu que l'installation puisse comporter plusieurs capteurs de sécurité au vent (par exemple un capteur par façade exposée). Dans ce cas, il est préférable que chaque capteur soit appairé séparément à tous les actionneurs de la façade concernée. L'appairage du capteur consiste à placer un actionneur dans un mode d'appairage, par exemple à l'aide du premier dispositif de commande, déjà connu de l'actionneur, et à provoquer l'émission d'une commande d'appairage par le capteur de sécurité. Seul l'actionneur placé en mode d'appairage enregistre l'identifiant du capteur, noté par la suite ID WS. L'opération est répétée autant de fois qu'il y a d'actionneurs à appairer avec le capteur.

Alternativement, les appairages sont réalisés par l'intermédiaire du deuxième dispositif de commande et en utilisant des communications bidirectionnelles entre ce dispositif, le capteur de sécurité et les actionneurs.

Dans une troisième étape S3, on transmet au capteur de sécurité au vent une information contenant le seuil TH affecté à chaque type ou en particulier à chaque type, ceci afin de remplir ou de mettre à jour la table 41. Le capteur de sécurité étant préférentiellement autonome, l'information utile qui sera contenue dans la table 41 est au préalable dupliquée dans une première mémoire tampon 42 ou dans une deuxième mémoire tampon 43 ou encore dans une troisième mémoire tampon 44.

La première mémoire tampon 42 appartient au deuxième dispositif de commande 22, dont les moyens radios sont alimentés en permanence. Quand l'installateur ajuste les seuils de réglage et/ou définit les types du capteur de sécurité 24, à l'aide de l'interface 22a, il agit en fait sur le contenu de la première mémoire tampon car le capteur de sécurité n'est pas en écoute radio permanente. C'est au moment où le capteur passe en phase radio active qu'il interroge le deuxième dispositif de commande pour savoir en particulier si une modification de la mémoire tampon a eu lieu. Si oui, il est procédé à la transmission des informations de la mémoire tampon vers le capteur de sécurité et elles sont enregistrées dans la table 41.

Alternativement, le contenu de la mémoire tampon est systématiquement transmis lors de chaque interrogation.

Si le réglage est effectué à l'aide du premier dispositif de commande 21, alors la deuxième mémoire tampon 43 est utilisée. Celle-ci est logée dans le dispositif relais 23. Quand l'installateur ajuste les seuils de réglage et/ou définit les types du capteur de sécurité 24, à l'aide de l'interface 21a, il agit en fait sur le contenu de la deuxième mémoire tampon 43. Pour le reste, la transmission a lieu comme dans le cas de la première mémoire tampon.

La troisième mémoire tampon 44 est logée dans le quatrième actionneur 17 et peut être utilisée de la même manière que la deuxième mémoire tampon pour effectuer un réglage des seuils à partir du premier dispositif de commande, ce qui évite le recours à un dispositif relais spécifique.

Le cas échéant, la table permet, pour un même type, l'affectation de plusieurs seuils en affectant une commande spécifique à chaque seuil, ce qui fait l'objet de la quatrième étape S4 du procédé d'initialisation. On a ainsi un sous-niveau d'affectation de codes de commande distincts à des seuils distincts, pour un même type d'éléments domotiques mobiles.

La figure 7 décrit sous forme d'une étape unique S10 le procédé de fonctionnement du capteur selon l'invention. Dans cette étape, il est testé par le capteur si un des seuils enregistrés est dépassé. Dans ce cas, une commande de sécurité est diffusée, en indiquant que cette commande concerne les éléments dont le type est celui qui correspond au seuil.

La figure 8 décrit une trame d'émission envoyée par le capteur de sécurité au vent lorsqu'un seuil a été dépassé. La trame d'émission contient au moins un premier bloc F1 identifiant le capteur, par exemple l'identifiant du capteur ID WS et/ou une information comme une « clé-maison » permettant de s'assurer que le capteur appartient au réseau, un deuxième bloc F2 contenant un identifiant de type, le type étant celui dont le seuil a été dépassé, et un troisième bloc F3 contenant le code de la commande de sécurité à réaliser. Cette trame est émise sous forme de diffusion unidirectionnelle. Elle est répétée plusieurs fois de manière à s'affranchir de parasites éventuels lors de la diffusion.

Le codage de l'identifiant de type dans le bloc F2 au sein de la trame est préférentiellement tel que plusieurs types peuvent être adressés simultanément. Par exemple, si le bloc F2 est codé sur un octet et qu'on prévoit que le capteur de sécurité peut gérer jusqu'à 4 types différents d'éléments mobiles, chaque type sera codé par deux bits. L'octet F2 peut alors contenir simultanément les 4 identifiants, ou seulement trois d'entre eux, ou deux d'entre eux ou enfin un seul des identifiants de type. Cette méthode de codage est particulièrement utile lorsqu'il se trouve qu'un même seuil est affecté à deux types distincts (ou plus) d'éléments mobiles.

Dans un mode de réalisation simplifié, il n'existe qu'une seule commande de sécurité, commune à tous les actionneurs, par exemple une commande de repli total. Dans ce cas, le troisième bloc F3 est inutile puisque chaque actionneur sait quel type de commande exécuter lors d'une réception d'un message diffusé par le capteur de sécurité. L'identifiant du capteur de sécurité le définissant en tant que capteur de sécurité WS suffit alors à définir la commande de sécurité.

Cependant, comme dans l'art antérieur, le capteur peut avertir également les dispositifs que le vent a disparu, afin d'autoriser de nouvelles commandes de déploiement. Préférentiellement, une diffusion de cette information a lieu lors du passage à la baisse d'un seuil de vent calme prédéterminé et commun à tous les types. Cette information n'est pas une commande de sécurité et n'engendre pas d'action de sécurité : au contraire, elle annule ou inhibe une interdiction de déploiement enregistrée dans les dispositifs suite à la réception d'un signal relatif à une commande de sécurité.

De manière à préserver l'autonomie énergétique du capteur de sécurité, il est également possible que la commande de sécurité soit émise en point à point par le capteur vers un dispositif relais plutôt que diffusée directement par le capteur. C'est alors le dispositif relais qui procède à la diffusion de la commande de sécurité.

La figure 9 représente en une seule étape S20 un programme de mise à jour de la table d'affectation. Cette étape est activée par le capteur de sécurité quand il communique de manière bidirectionnelle avec un dispositif comprenant une mémoire tampon 42, 43 ou 44. Lors de l'étape S20, le contenu de la mémoire tampon est transféré vers le capteur et enregistré dans la table d'affectation 41 contenue dans une mémoire du capteur.

Pour satisfaire le recours à des habitudes d'installation, le capteur de vent comprend également un moyen manuel d'ajustement de seuil 24c, par exemple un potentiomètre avec curseur. Quand ce moyen est activé par l'installateur, un même seuil fixé par ce moyen manuel et repéré par la position du curseur sur une échelle est affecté à tous les types d'éléments mobiles.

Autrement dit, cette opération manuelle suffit à effacer tous les seuils précédemment enregistrés, et peut constituer un moyen simple de remise de l'ensemble des équipements dans un même état vis-à-vis de seuils de vent.

## Revendications

1. Capteur de sécurité au vent (24) destiné à la protection d'éléments domotiques mobiles (12,14,16,18), dont les actionneurs raccordés auxdits éléments mobiles doivent obéir à des ordres envoyés par ledit capteur de sécurité au vent, chaque élément mobile étant affecté à un type distinct d'éléments domotiques mobiles, enregistrés dans chaque actionneur raccordé audit élément mobile, ledit capteur comprenant un dispositif de mesure physique (24a) d'au moins un paramètre lié à l'action du vent, comprenant un moyen de communication radiofréquences et adapté pour émettre un signal lorsque le paramètre dépasse un seuil, **caractérisé en ce qu'**il comprend une table d'affectation (41) dans laquelle figurent au moins un premier seuil et un deuxième seuil relatifs à desdits types distincts d'éléments domotiques mobiles, **et en ce que** le signal émis comprend :
• un identifiant du type d'éléments domotiques mobiles dont le seuil a été dépassé,
• un code de commande d'une action de sécurité, et
• un identifiant de capteur de sécurité et/ou une information permettant de s'assurer de l'appartenance dudit capteur au réseau.

2. Capteur de sécurité au vent selon la revendication 1, **caractérisé en ce que** lesdits seuils sont affectés à un type d'éléments mobiles.

3. Capteur de sécurité au vent selon la revendication 1, **caractérisé en ce que** l'identifiant de type peut prendre au moins une première valeur prédéfinie, relative à un élément domotique mobile de type à lames orientables et empilables, une deuxième valeur prédéfinie, relative à un élément domotique mobile de type écran enroulable à mouvement vertical, et une troisième valeur prédéfinie, relative à un élément domotique mobile de type store enroulable avec composante horizontale de mouvement.

4. Capteur de sécurité au vent selon la revendication 2 ou 3, **caractérisé en ce que** la table d'affectation comprend au moins un sous-niveau d'affectation de codes de commande distincts à des seuils distincts, pour un même type d'éléments domotiques mobiles.

5. Capteur de sécurité au vent selon l'une des revendications précédentes, **caractérisé en ce que** le moyen de communication est bidirectionnel.

6. Capteur de sécurité au vent selon l'une des revendications précédentes, **caractérisé en ce qu'il** comprend un programme de mise à jour de la table d'affectation (24d) et que un même seuil par défaut est affecté à tous les types d'éléments domotiques mobiles tant qu'une première mise à jour n'a pas été effectuée.

7. Capteur de sécurité au vent selon l'une des revendications précédentes, **caractérisé en ce qu'**il comprend un moyen manuel d'ajustement de seuil (24c) et que un même seuil fixé par ce moyen manuel d'ajustement est affecté à tous les types d'éléments domotiques mobiles lorsque celui-ci est activé.

8. Capteur de sécurité au vent selon l'une des revendications précédentes, **caractérisé en ce qu'**il comprend un moyen d'alimentation autonome tel qu'une pile primaire ou un accumulateur rechargé par un panneau photovoltaïque.

9. Installation domotique (10) comprenant au moins un capteur de sécurité au vent (24) selon l'une des revendications précédentes et au moins un dispositif domotique (17, 22, 23), raccordé au secteur alternatif, **caractérisée en ce que** ce dispositif domotique comprend un moyen bidirectionnel de communication radiofréquences et comprend une mémoire tampon (42, 43, 44) adaptée pour contenir des valeurs de seuils, que la table d'affectation met en correspondance avec un identifiant de type d'éléments domotiques mobiles, et qui sont transmises au capteur de sécurité lors d'une interrogation par le capteur de sécurité.

10. Installation domotique selon la revendication précédente, **caractérisée en ce que** les valeurs de seuils sont ajustées et enregistrées dans la mémoire tampon (42, 43, 44) à l'aide d'un moyen d'interface homme-machine (21a, 22a) d'un dispositif de commande (21, 22) de l'installation.

11. Installation domotique selon l'une des revendications 9 ou 10, **caractérisée en ce qu'**elle comprend des actionneurs (11, 13, 15, 17) entraînant des éléments mobiles, chaque actionneur étant muni de moyens bidirectionnels de communication et apte à recevoir et à exécuter :
- une commande d'appairage au capteur de sécurité
- une commande d'enregistrement d'un identifiant de type
- une commande de mouvement contenant l'identifiant de l'actionneur
- une commande de mouvement contenant l'identifiant de type

12. Dispositif de commande (21, 22) d'une installation domotique comprenant un capteur de sécurité au vent selon la revendication 4, **caractérisé en ce qu'**il comprend un moyen d'interface homme-machine (21a, 22a) adapté pour différencier au moins un premier réglage relatif à un élément domotique mobile de type à lames orientables et empilables, un deuxième réglage relatif à un élément domotique mobile de type écran enroulable à mouvement vertical, et un troisième réglage relatif à un élément domotique mobile de type store enroulable avec composante horizontale de mouvement.

## Patentansprüche

1. Windschutzsensor (24) zum Schutz von mobilen Haushaltsautomationsgeräten (12, 14, 16, 18), deren an die mobilen Geräte angeschlossenen Aktoren den vom Windschutzsensor gesendeten Befehlen Folge leisten müssen, wobei jedes mobile Gerät zu einer unterschiedlichen Art von mobilem Haushaltsautomationsgerät gehört, die in jedem ans mobile Gerät angeschlossenen Aktor gespeichert sind, wobei der Sensor ein physisches Messgerät (24a) für mindestens einen mit der Windeinwirkung zusammenhängenden Parameter umfasst, der ein Radiofrequenz (RF)-Kommunikationsmittel umfasst und derart eingerichtet ist, das es ein Signal sendet, wenn der Parameter einen Schwellenwert übersteigt, **dadurch gekennzeichnet, dass** er eine Zuordnungstabelle (41) umfasst, in der mindestens ein erster Schwellenwert und ein zweiter Schwellenwert enthalten sind, die mit den unterschiedlichen Arten von mobilen Haushaltsautomationsgeräten zusammenhängen, und dadurch, dass das abgesendete Signal umfasst:
• eine Typenkennung für die mobilen Haushaltsautomationsgeräte, bei denen der Schwellenwert überstiegen worden ist,
• einen Befehlscode für eine Sicherungshandlung und
• eine Kennung des Sicherheitssensors und/oder eine Information, die es ermöglicht, die Zugehörigkeit des Sensors zum Netz zu verifizieren.

2. Sensor nach Anspruch 1, **dadurch gekennzeichnet, dass** die Schwellenwerte einer Art von mobilem Gerät zugeordnet sind.

3. Sensor nach Anspruch 1, **dadurch gekennzeichnet, dass** die Typenkennung mindestens einen ersten vorgegebenen Wert in Bezug auf ein mobiles Gerät mit beweglichen und stapelbaren Lamellen, einen zweiten vorgegebenen Wert in Bezug auf ein mobiles Haushaltsautomationsgerät von der Art einer vertikal aufrollbaren Abschirmung, und einen dritten vorgegebenen Wert in Bezug auf ein mobiles Haushaltsautomationsgerät von der Art einer Rollade mit horizontaler Bewegungskomponente annehmen kann.

4. Sensor nach Anspruch 2 oder 3, **dadurch gekennzeichnet, dass** die Zuordnungstabelle mindestens für eine einzelne Art von mobilem Haushaltsautomationsgerät eine Unterstufe für die Zuordnung unterschiedlicher Befehlscodes zu unterschiedlichen Schwellenwerten umfasst.

5. Sensor nach einem der vorstehenden Ansprüche, **dadurch gekennzeichnet, dass** das Kommunikationsmittel bidirektional ist.

6. Sensor nach einem der vorstehenden Ansprüche, **dadurch gekennzeichnet, dass** er ein Programm zur Aktualisierung der Zuordnungstabelle (24d) umfasst, und dass als Werkseinstellung allen Arten von mobilen Haushaltsautomationsgeräten ein einziger Schwellenwert zugeordnet ist, solange keine erste Aktualisierung erfolgt ist.

7. Sensor nach einem der vorstehenden Ansprüche, **dadurch gekennzeichnet, dass** er ein Mittel (24c) zur manuellen Einstellung des Schwellenwerts, und dass ein einzelner mit diesem manuellen Einstellungsmittel festgelegter Schwellenwert bei Aktivierung allen Arten von mobilen Haushaltsautomationsgeräten zugeordnet wird.

8. Sensor nach einem der vorstehenden Ansprüche, **dadurch gekennzeichnet, dass** er eine selbständige Stromversorgung wie z.B. eine primäre Batterie oder einen mittels einer Photovoltaikanlage aufgeladenen Akku umfasst.

9. Haushaltsautomationsanlage (10) umfassend mindestens einen Sensor (24) nach einem der vorstehenden Ansprüche und mindestens ein Haushaltsautomationsgerät (17, 22, 23), das an die AC-Netzspannung angeschlossen ist, **dadurch gekennzeichnet, dass** das Haushaltsautomationsgerät ein bidirektionales RF-Kommunikationsmittel sowie einen Pufferspeicher (42, 43, 44), der zur Speicherung der Schwellenwerte geeignet ist, umfasst, welche die Zuordnungstabelle einer Typenkennung für mobile Haushaltsautomationsgeräte zuordnet, und die bei Anfrage durch den Sensor an den Sensor gesendet werden.

10. Haushaltsautomationsanlage nach dem vorstehenden Anspruch, **dadurch gekennzeichnet, dass** die Schwellenwerte mittels einer Benutzeroberfläche (21a, 22a) eines Steuerungsgeräts (21, 22) der Anlage eingestellt und im Pufferspeicher (42, 43, 44) gespeichert werden.

11. Anlage nach einem der Ansprüche 9 oder 10, **dadurch gekennzeichnet, dass** sie Aktoren (11, 13, 15, 17) umfasst, die die mobilen Geräte steuern, wobei jeder Aktor über bidirektionale Kommunikationsmittel verfügt und geeignet ist, folgende Befehle zu empfangen und auszuführen:
- einen Befehl zum Peering mit dem Sicherheitssensor,
- einen Befehl zur Speicherung einer Typenkennung,
- einen Bewegungsbefehl, der die Kennung des Aktors enthält,
- einen Bewegungsbefehl, der die Typenkennung enthält.

12. Steuerungsgerät (21, 22) für eine Haushaltsautomationsanlage, die einen Sensor nach Anspruch 4 umfasst, **dadurch gekennzeichnet, dass** es eine Benutzeroberfläche (21a, 22a) umfasst, die derart eingerichtet ist, dass sie mindestens zwischen einer ersten Einstellung in Bezug auf ein mobiles Gerät mit beweglichen und stapelbaren Lamellen, einer zweiten Einstellung in Bezug auf ein mobiles Haushaltsautomationsgerät von der Art einer vertikal aufrollbaren Abschirmung und einer dritten Einstellung in Bezug auf ein mobiles Haushaltsautomationsgerät von der Art einer Rollade mit horizontaler Bewegungskomponente unterscheiden kann.

## Claims

1. A wind safety sensor (24) designed to protect mobile home automation elements (12, 14, 16, 18), whose actuators connected to the mobile elements must obey commands sent by the said wind safety sensor, each mobile element being assigned to a distinct type of mobile home automation elements, registered in each actuator connected to the said mobile element, said sensor comprising a physical device (24a) for measuring at least one parameter associated with the action of the wind, comprising a radiofrequency communication means and configured for transmitting a signal when the parameter exceeds a threshold, **characterized in that** it comprises an assignment table (41) in which at least one first threshold and one second threshold relating to distinct types of mobile home automation elements are provided, **and in that** the transmitted signal comprises:
- an identifier of the mobile home automation type which threshold has been exceeded,
- a command code controlling a safety action, and
- an identifier of the safety sensor and/or information making it possible to check that the sensor belongs to the network.

2. The wind safety sensor according to claim 1, **characterized in that** the said thresholds are assigned to one type of mobile elements.

3. The wind safety sensor according to claim 1, **characterized in that** the type identifier can take at least one first predefined value, relating to a mobile home automation element of the type with orientable and stackable slats, a second predefined value, relating to a mobile home automation element of the windable screen type with vertical movement, and a third predefined value relating to a mobile home automation element of the windable blind type with horizontal movement component.

4. The wind safety sensor according to claim 2 or 3, **characterized in that** the assignment table comprises at least one sublevel for assigning distinct control codes to distinct thresholds, for one and the same type of mobile home automation elements.

5. The wind safety sensor according to claim 1, **characterized in that** the communication means is bidirectional.

6. The wind safety sensor according to claim 1, **characterized in that** it comprises a program for updating the assignment table (24d) and wherein one and the same default threshold is assigned to all the types of mobile home automation elements until a first update has been made.

7. The wind safety sensor according to claim 1, **characterized in that** it comprises a manual threshold adjustment means (24c) and **in that** one and the same threshold set by this manual adjustment means is assigned to all the types of mobile home automation elements when it is activated.

8. The wind safety sensor according to any one of the preceding claims, **characterized in that** it comprises a standalone power supply means such as a primary battery or an accumulator battery recharged by a photovoltaic panel.

9. A home automation installation (10) comprising at least one wind safety sensor (24) according to any one of the preceding claims and at least one home automation device (17, 22, 23), connected to the AC mains, **characterized in that** this home automation device comprises a bidirectional radiofrequency communication means and comprises a buffer memory (42, 43, 44) configured for containing assignment table threshold values that the assignment table put in correspondence with a type of identifier of mobile home automation elements, and which are transmitted to the safety sensor when interrogated by the safety sensor.

10. The home automation installation according to the preceding claims, **characterized in that** the threshold values are adjusted and stored in the buffer memory (42, 43, 44) using a human-machine interface means (21a, 22a) of a control device (21, 22) of the installation.

11. The home automation installation according to any one of claims 9 or 10, **characterized in that** it comprises actuators (11, 13, 15, 17) driving mobile elements, each actuator being provided with bidirectional communication means and able to receive and execute :
- a command to pair with the safety sensor
- a command to store a type identifier
- a movement command containing the identifier of the actuator
- a movement command containing the type identifier.

12. A control device (21, 22) for a home automation installation comprising a wind safety sensor according to claim 4, **characterized in that** it comprises a human-machine interface means (21a, 22a) configurated differentiate at least one first setting relating to a mobile home automation element of the type with orientable and stackable slats, a second setting relating to a mobile home automation element of the windable screen type with vertical movement, and a third setting relating to a mobile home automation element of the windable blind type with horizontal movement component.
